# EUROPÄISCHE PATENTSCHRIFT

(11) **EP 2 647 281 B1**
(45) Veröffentlichungstag und Bekanntmachung des Hinweises auf die Patenterteilung: **02.10.2019**
(21) Anmeldenummer: 13001472.3
(22) Anmeldetag: 22.03.2013
(51) Int. Cl.: A01F 15/07

(54) **Rundballenpresse**
Round baler
Presse à balles rondes

(30) Priorität: 03.04.2012 DE 102012006833
(43) Veröffentlichungstag der Anmeldung: 09.10.2013
(73) Patentinhaber: Maschinenfabrik Bernard Krone GmbH, 48480 Spelle (DE)
(72) Erfinder: Sand, Christian, 49509 Recke (DE)

(56) Entgegenhaltungen:
- DE-A1-102004 023 701
- DE-A1-102005 001 405
- US-A- 5 581 973
- US-A1- 2003 230 046

## Beschreibung

Die Erfindung bezieht sich auf eine Rundballenpresse gemäß dem Oberbegriff des Anspruchs 1. Rundballenpressen werden zum Aufnehmen und Pressen von landwirtschaftlichem Erntegut, wie Stroh, Heu, Anwelkgut oder dergleichen eingesetzt. Dabei wird das auf dem Boden liegende Erntegut mit einer Aufnahmeeinrichtung aufgenommen und mit einem Schneid- oder Förderaggregat in eine Presskammer mit Presseinrichtungen geleitet, in der ein Rundballen gebildet wird, wie in der US 2003/230046 A1 gezeigt wird. Dieser Rundballen wird in der Presskammer mit beispielsweise Netz oder Garn umwickelt, so dass er zusammengehalten wird. Zur Silierung des Ernteguts werden die jeweiligen Rundballen entweder direkt auf einem der Rundballenpresse nachgeordneten oder von einem an einem Zugfahrzeug angehängten Ballenwickler, welcher den von der Rundballenpresse auf dem Boden abgelegten Rundballen aufnimmt, mit Wickelfolie umwickelt. Insbesondere der Wickelvorgang auf dem Ballenwickler stellt immer wieder einen Engpass dar. Zum einen werden viele Anstrengungen unternommen, um die Dauer des Wickelvorgangs zu verkürzen und zum anderen um den hohen Verbrauch des Wickelmaterials zu minimieren.

Dadurch, dass die Mantelfläche eines Rundballens größer ist als dessen Stirnseite, ergibt sich bei einem Standardwickelverfahren, bei dem bei jeder Wicklung gleichzeitig die Mantel- als auch die Stirnfläche umwickelt wird, zwangsläufig eine ungleichmäßige Verteilung der Wickelmateriallagen auf dem Rundballen. Dadurch wird ein unnötig hoher Wickelmaterialverbrauch an den Stirnseiten des Rundballens verursacht.

Zur Einsparung von Wickelmaterial sind im Stand der Technik einige Lösungsvorschläge gemacht worden. Beispielsweise ist eine Press-Wickelkombination bekannt, dessen Ballenwickler nach einem 3D-Wickelverfahren arbeitet. Hierbei sind die Wickelmaterialrollen des Ballenwicklers um 90 Grad schwenkbar angeordnet, so dass sie sowohl in horizontaler als auch in vertikaler Ebene Wickelmaterialbahnen an den Rundballen abgeben können. Dadurch soll insbesondere eine gleichmäßige Verteilung der Wicklungen auf dem Rundballen erreicht und somit Wickelmaterial eingespart werden. Da die Rundballen jedoch zusätzlich zu der Wickelfolie weiterhin in der Presskammer mit Garn oder Netz eingewickelt werden, bleibt eine aufwändige Trennung der unterschiedlichen Wickelmaterialien bei der Entsorgung bestehen. Des Weiteren sind bei diesem Wickelverfahren ein hoher Aufwand, ein hoher Zeitbedarf zum Einwickeln eines Rundballens und ein damit verbundener geringer Durchsatz der Press-Wickelkombination als nachteilig anzusehen. Zur Vermeidung dieser Probleme wurden bereits einige Versuche durchgeführt, bei denen die Rundballen auf der Mantelfläche in der Presskammer anstatt mit Garn oder Netz mit Folie umwickelt werden. Hierbei ist insbesondere vorteilhaft anzusehen, dass die Folie den Rundballen im Gegensatz zu Netz oder Garn stärker zusammenhält. Dadurch müssen bei dem darauffolgenden Wickelvorgang auf dem Ballenwickler lediglich noch so viele Lagen der Wickelfolie aufgetragen werden, wie für die Stirnseite des Rundballens notwendig sind, was insbesondere die Wickelzeit verkürzt und den Materialverbrauch senkt. Dadurch, dass die Folienlagen darüber hinaus in der Presskammer in dieselbe Richtung auf den Rundballen aufgetragen werden, wie sich der Rundballen dreht, werden bereits in der Presskammer die Grashalme derart angedrückt, dass sie die Folie nicht beschädigen. Ferner entfällt bei der Auflösung der Rundballen eine mühsame Trennung von unterschiedlichen Wickelmaterialien. Jedoch ist zu berücksichtigen, dass die spezielle Folie zum Einwickeln der Rundballen in der Presskammer, beispielsweise im Gegensatz zu Netz, wesentlich schwieriger in der Handhabung ist. Zur Umwicklung des Rundballens mit Wickelmaterial in der Presskammer wird das Wickelmaterial von einer Vorratsrolle abgezogen und gebräuchlich über Umlenkeinrichtungen zu einer zumindest zwischen einer Parkposition und einer Zuführposition verschwenkbaren Zuführeinrichtung geführt, welche das Wickelmaterial in der Zuführposition mit dem Rundballen in der Presskammer in Eingriff bringt. Da die Folie sehr leicht, dünn und glatt ist, kann sie außerhalb des Wickelvorgangs sehr schnell verrutschen oder von der Vorratsrolle zurückgezogen werden. Des Weiteren kann das Wickelmaterial beispielsweise beim Verlagern der Vorratsrolle für Wartungsarbeiten vollständig aus den Bereich der Zuführeinrichtung herausgezogen werden. Hinzu kommen äußere Einflussfaktoren, wie beispielsweise starker Wind während der Fahrt der Rundballenpresse, welche eine Sicherung der dünnen Folie in ihrer Lage ohne zusätzliche Sicherungseinrichtungen enorm erschweren. Ist die Folie verrutscht oder von der Vorratsrolle zurückgezogen worden, ist kein sicherer Wickelstart gewährleistet und die Folie muss umständlich neu eingelegt werden, was vor allem viel Zeit in Anspruch nimmt und demzufolge zusätzliche Kosten entstehen lässt.

Deshalb ist es Aufgabe der vorliegenden Erfindung, eine verbesserte Rundballenpresse mit einer Wickelvorrichtung zu schaffen, welche mit minimalem Material und damit auch mit geringem Kostenaufwand eine verbesserte Sicherung einer Wickelmaterialbahn in ihrer Lage ermöglicht und dadurch die Betriebssicherheit der Rundballenpresse auch bei der Verwendung von Folie als Wickelmaterial garantiert.

Gelöst wird diese Aufgabe der Erfindung mit den kennzeichnenden Merkmalen des Anspruchs 1. Weitere vorteilhafte Weiterbildungen gehen aus den abhängigen Ansprüchen hervor.

Eine Rundballenpresse gemäß der Erfindung weist eine Wickelvorrichtung mit einer Zuführeinrichtung auf, welche zum Zuführen einer Wickelmaterialbahn zu einem Rundballen zwischen zumindest einer Parkstellung und einer Zuführstellung schwenkbar angeordnet ist. Die erfindungsgemäße Rundballenpresse umfasst eine zusätzliche Sicherungseinrichtung zum Sichern einer Wickelmaterialbahn außerhalb des Wickel-vorgangs. Die Sicherungseinrichtung ist derart ausgebildet, dass die Wickelmaterialbahn automatisch in der Parkstellung der Zuführeinrichtung eingeklemmt wird.

Die Zuführeinrichtung kann hierbei unterschiedlich ausgebildet sein. Gebräuchlich sind schwenkbare Zuführwalzen mit Klemmeinrichtungen, welche das Wickelmaterial von einer Wickelmaterialvorratsrolle zu der Presseinrichtung der Presskammer führen. Darüber hinaus kann das Wickelmaterial auch über eine schwenkbare Armanordnung dem Rundballen zugeführt werden. Diese kann beispielsweise zwischen zwei Schwenkarmen angeordnete Führungsrollen umfassen, zwischen denen das von der Vorratsrolle abgezogene Wickelmaterial geführt wird und mittels eines Führungsbleches dem Rundballen in der Presskammer zugeführt wird. Die Erfindung sieht vor, dass die Zuführeinrichtung der Wickelvorrichtung und die Sicherungseinrichtung relativ zueinander bewegbar sind. Da die Zuführeinrichtung erfindungsgemäß bereits zwischen zumindest zwei Positionen verschwenkbar ist, kann die Sicherungseinrichtung dementsprechend sowohl verlagerbar als auch ortsfest an den Gehäusewänden der Rundballenpresse angeordnet sein. In der folgenden Beschreibung wird ausschließlich auf die letzte Variante eingegangen, da sie unter anderem aufgrund des geringen konstruktiven Aufwands als besonders vorteilhaft anzusehen ist. Die Sicherungseinrichtung ist derart in der Rundballenpresse angeordnet, dass sie zusammen mit der sich in der Parkstellung befindlichen Zuführeinrichtung das Wickelmaterial in der Lage sichert. Hierbei wird das über die Zuführeinrichtung geführte Wickelmaterial durch die Verlagerung der Zuführeinrichtung in ihre Parkstellung zwischen der Sicherungseinrichtung und der Zuführeinrichtung eingeklemmt. Dazu ist es erforderlich, dass sich die Sicherungseinrichtung zumindest annähernd im Bereich der Bewegungsbahn der Zuführeinrichtung befindet. Die Sicherungseinrichtung erstreckt sich vorzugsweise quer zur Längsmittelachse der Rundballenpresse über die gesamte Breite der Wickelmaterialbahn. Sie kann unter anderem als Rundstab oder auch als Vierkantbalken ausgeführt sein, wobei ein Rundstab kostengünstiger und einfacher montierbar ist. Vorzugsweise ist die Sicherungseinrichtung derart ausgebildet, dass die Wickelmaterialbahn kraftschlüssig in ihrer Lage gehalten wird. Hierbei sind mehrere Ausführungsmöglichkeiten denkbar. Beispielsweise kann die Sicherungsseinrichtung zumindest teilweise mit einer Gummibeschichtung versehen sein, um insbesondere ein Verrutschen der Wickelmaterialbahn zu verhindern. Weiterhin ist es denkbar, die Sicherungseinrichtung mit einer zusätzlichen elastisch verformbaren Hülle zu umgeben, wie beispielsweise mit einem Schaumstoffüberzug, um sowohl gegebenenfalls zu starke Anpresskräfte auffangen zu können als auch eine hohe Klemmwirkung zu erzielen. Ferner schützt ein derartiger Überzug vor Beschädigungen des Wickelmaterials. Dadurch, dass die Sicherungseinrichtung vorteilhaft feststehend ist und ein Antrieb zum Verschwenken der Zuführeinrichtung zwischen zumindest zwei Positionen bereits vorhanden ist, bedarf es keiner zusätzlichen Antriebe. Darüber hinaus kann die Sicherungseinrichtung vorteilhaft nachgerüstet werden. Die Zuführeinrichtung ist unterschiedlich antreibbar. Es werden vorzugsweise sowohl hydraulische als auch elektrische Stellantriebe verwendet. Die genaue Position der Parkstellung der Zuführeinrichtung lässt sich in den Grundeinstellungen des Bedienterminals der Rundballenpresse vorteilhaft je nach Lage und Ausführung der Sicherungseinrichtung einstellen. Demzufolge ist der Anpressdruck der Zuführeinrichtung beim Andrücken des Wickelmaterials an die Sicherungseinrichtung ebenso veränderbar.

Somit wird eine Rundballenpresse bereitgestellt, welche mittels einer zusätzlichen Sicherungseinrichtung eine Wickelmaterialbahn im Nichtbetrieb der Wickelvorrichtung in ihrer Lage sichert. Besonders vorteilhaft sind hierbei der geringe konstruktive Aufwand und die geringen Kosten anzusehen. Des Weiteren ist anzumerken, dass die Erfindung auf verschiedenen Rundballenpressen anwendbar ist. Insbesondere können bei einer Press-Wickelkombination und ganz besonders bei einer kontinuierlich arbeitenden Press-Wickelkombination sowohl die gesamte Wickelzeit als auch Wickelmaterial eingespart werden. Die erfindungsgemäße Rundballenpresse kann darüber hinaus für unterschiedliche Wickelmaterialen ausgelegt werden. Insbesondere ist die Sicherungseinrichtung aufgrund der schwierigeren Handhabbarkeit für Folie vorgesehen, kann jedoch ebenso für das Standardwickelmaterial Netz eingesetzt werden.

Eine detaillierte Beschreibung des Gegenstandes der Erfindung erfolgt nun anhand eines Ausführungsbeispiels einer Rundballenpresse.

In der Zeichnung zeigt:
- **Fig. 1:**: eine schematische Seitenansicht einer erfindungsgemäßen Rundballenpresse;
- **Fig. 2:**: eine schematische Seitenansicht der Wickeleinrichtung der erfindungsgemäßen Rundballenpresse der Fig.1 mit einer Zuführeinrichtung, welche in der Zuführposition dargestellt ist;
- **Fig. 3:**: eine schematische Seitenansicht der Wickeleinrichtung der erfindungsgemäßen Rundballenpresse der Fig.1 mit einer Zuführeinrichtung, welche in der Parkposition dargestellt ist.

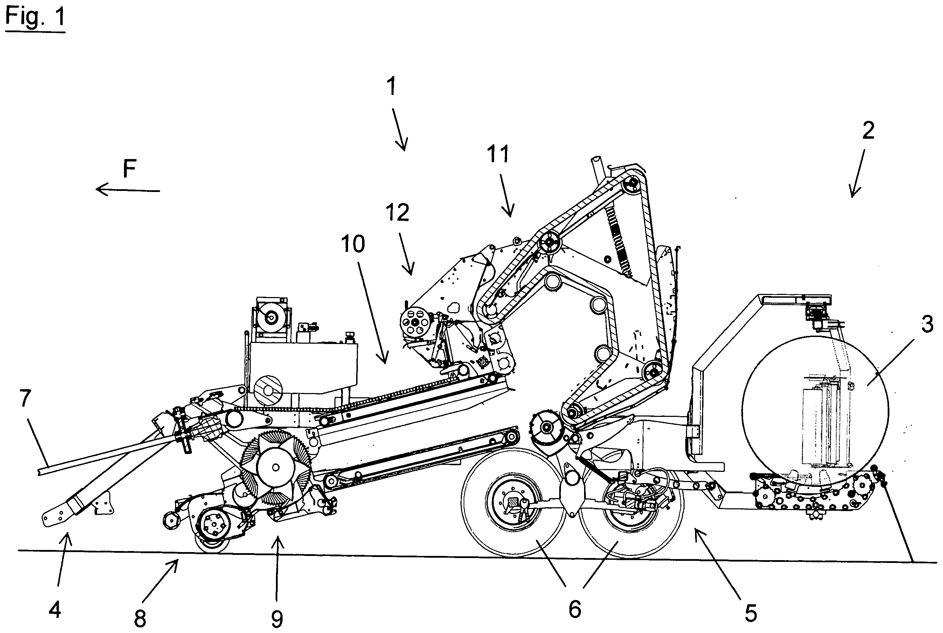

Die Fig. 1 zeigt eine schematisch dargestellte Seitenansicht einer erfindungsgemäßen Rundballenpresse 1 mit einem nachgeordneten Ballenwickler 2 zum Umwickeln der Rundballen 3 mit Wickelfolie, wobei die Rundballenpresse 1 in besonderer Ausführungsform kontinuierlich arbeitend ausgeführt ist. Beide Einheiten ruhen auf einem gemeinsamen, über eine Zugdeichsel 4 mit einem in dieser Figur nicht dargestellten Zugfahrzeug, insbesondere landwirtschaftlichen Schlepper, verbindbaren Grundrahmen 5, welcher sich über Räder 6 zum Boden hin abstützt. Der Antrieb der Rundballenpresse 1 und des Ballenwicklers 2 erfolgt über eine mit dem Zugfahrzeug koppelbaren Gelenkwelle 7. Die Rundballenpresse 1 umfasst im Wesentlichen eine Pickup 8 zur Aufnahme von auf dem Boden zumeist in Schwaden liegenden Erntegut. An diese schließt sich in Gutflussrichtung entgegen der Fahrtrichtung F eine Förder- und Schneideinrichtung 9 an, die das Erntegut weiter zu einem Speicherraum 10 fördert, welcher das Erntegut entweder zwischenspeichert, oder durch den das Erntegut zu einer Presskammer 11, in der der Rundballen 3 gebildet wird, weitergefördert wird. In der Presskammer 11 wird der Rundballen 3 von einer im vorderen Bereich der Rundballenpresse 1 angeordneten Wickelvorrichtung 12 auf seiner Mantelfläche mit einer dünnen Folie 14 umwickelt. Der fertig gepresste und auf der Mantelfläche mit Folie 14 umhüllte Rundballen 3 wird anschließend aus der Presskammer 11 zu dem nachgeordneten Ballenwickler 2 übergeben, auf dem der Rundballen 3 um seine Längsmittelachse in Drehung versetzt und mit Wickelfolienbahnen umhüllt wird. Dadurch, dass die Mantelfläche des Rundballens 3 bereits durch die Umwicklung in der Presskammer 11 mit einer dünnen Folienschicht umgeben ist, müssen durch den Ballenwickler 2 nur noch derart viele Wickelfolienschichten aufgetragen werden, wie es für die Stirnflächen des Rundballens 3 notwendig ist. Dadurch kann vor allem Wickelfolie aber auch Zeit zum Einwickeln des Rundballens 3 eingespart werden. Die geringe Wickelzeit hat in vorteilhafter Weise ganz besonders bei der in diesem Ausführungsbeispiel beschriebenen kontinuierlich arbeitenden Rundballenpresse 1 großen Einfluss, da hierbei ohne Betriebsunterbrechungen gepresst und gewickelt wird.

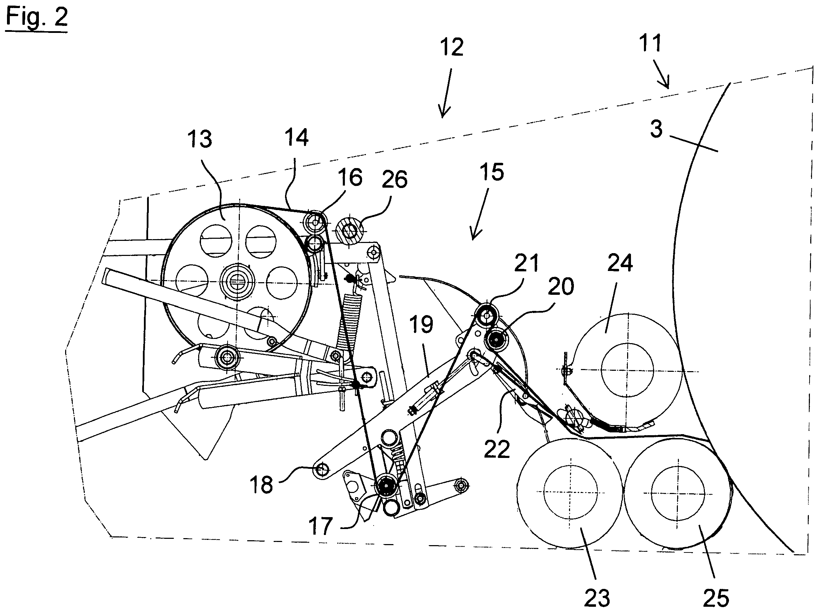

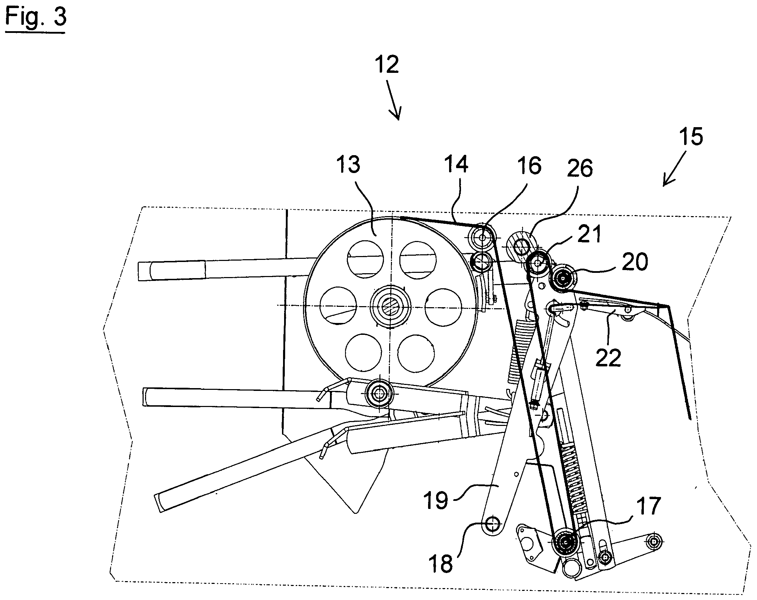

Die Wickelvorrichtung 12 im vorderen Bereich der Rundballenpresse 1 zum Umwickeln der Mantelfläche des Rundballens 3 in der Presskammer 11 ist in der Fig. 2 und 3 in einer Seitenansicht deutlicher veranschaulicht. Sie besteht aus einer Aufnahmeeinrichtung 13 für die Folienrolle, von der die Folie 14 zum Einwickeln des Rundballens 3 abgezogen wird, und einer Zuführeinrichtung 15 zum Zuführen der Folie 14 zu dem Rundballen 3 in der Presskammer 11. Zum Einlegen einer Folienrolle kann die Aufnahmeeinrichtung 13 ein- und ausgeschwenkt werden. Die Folienbahn 14 wird derart von dem Bediener zu der Zuführeinrichtung 15 geführt, wie es in der Fig. 2 gezeigt ist. Hierbei verläuft die Folie 14 über Umlenkwalzen 16,17 zu der Zuführeinrichtung 15, um die Folie 14 für den Wickelvorgang auf Spannung zu halten. Die Zuführeinrichtung 15 umfasst eine um eine quer zur Längsmittelachse der Rundballenpresse zumindest annähernd horizontal ausgerichtete Achse 18 schwenkbar angeordnete Armanordnung mit zwei Schwenkarmen 19. Zwischen den beiden Schwenkarmen 19 sind eine Breitziehwalze 20 und eine Führungswalze 21 angeordnet, zwischen denen die Folie 14 verläuft und breit gezogen wird. Darauffolgend wird die auf die Breite des Rundballens 3 ausgebreitete Folie 14 über ein Zuführblech 22 zu einer Zuführwalze 23 geführt, welche die Folie 14 in einen Spalt zwischen zwei Presswalzen 24,25 der Presskammer 11 zu dem rotierenden Rundballen 3 führt.

Die Zuführeinrichtung 15 ist zwischen einer Park-, Abschneide- und Zuführposition schwenkbar, wobei die Abschneideposition in der folgenden Beschreibung vernachlässigt wird.

In der Fig. 2 ist die Zuführposition der Zuführeinrichtung 15 dargestellt, in der die Folie 14 über die Zuführwalze 23 zu dem Rundballen 3 in der Presskammer 11 geführt wird. Die Parkposition der Zuführeinrichtung 15 ist in der Fig. 3 der Zeichnung gezeigt. Sie stellt den Nichtbetrieb der Wickelvorrichtung 12 dar. Durch einen Stellantrieb kann die Zuführeinrichtung 15 zwischen den verschiedenen Positionen hin- und hergefahren werden, wobei die genaue Stellung der Zuführeinrichtung 15 in den jeweiligen Positionen variabel eingestellt und in dem Bedienterminal der Rundballenpresse 1 abgespeichert werden kann.

Da die Folie 14 sehr dünn, leicht und glatt ist, ist sie schwieriger in der Handhabung als übliche Wickelmaterialien wie z.B. Netz. Sie kann, sobald sie nicht von dem rotierenden Rundballen 3 in die Presskammer 11 gezogen wird, beispielsweise bei Straßenfahrt der Rundballenpresse 1, durch Wind erfasst und aus den Führungen der Wickelvorrichtung 12 gezogen werden. Daher ist erfindungsgemäß eine Sicherungseinrichtung 26 vorgesehen, welche die Folie 14 in der Parkposition der Zuführeinrichtung 15 einklemmt und dadurch ein Verrutschen oder Herausziehen der Folie 14 verhindert. Diese ist in diesem Ausführungsbeispiel zwischen der Umlenkrolle 16 und der Führungswalze 21 der Zuführeinrichtung 15 angeordnet und als ein feststehender quer zur Längsmittelachse der Rundballenpresse 1 ausgerichteter Rundstab mit einer Schaumstoffbeschichtung ausgebildet. Wird die Zuführeinrichtung 15 mit der Führungswalze 21 um die Achse 18 aus der Zuführposition in die Parkposition verschwenkt, wird die Folie 14 zwischen der Sicherungseinrichtung 26 und der Führungswalze 21 der Zuführeinrichtung 15 eingeklemmt und somit in ihrer Lage gesichert. Sie kann weder auf den einzelnen Walzen verrutschen noch aus den Führungen der Wickelvorrichtung 12 herausgezogen werden. Die Sicherungsfunktion wird also automatisch mit dem Verschwenken der Zuführeinrichtung 15 in die Parkposition aktiviert. Es wird kein gesonderter Antrieb benötigt, von dem die Sicherungseinrichtung 26 betätigt werden muss. Dadurch können vor allem Kosten und ein enormer Arbeitsaufwand gespart werden und die Sicherungseinrichtung 26 ist vorteilhaft leicht nachrüstbar.

Diese zusätzliche Sicherungseinrichtung 26 für die Folie 14 bietet eine verbesserte Betriebssicherheit der erfindungsgemäßen Rundballenpresse 1. Dadurch, dass die Folie 14 in der Parkposition eingeklemmt wird, bleibt sie in ihrer Führungsbahn und es ist bei jedem Wickelvorgang ein sicherer Wickelstart gewährleistet.

Auch wenn das Ausführungsbeispiel die Erfindung anhand einer als kontinuierlich arbeitende Press-Wickelkombination ausgebildete Rundballenpresse 1 verdeutlicht, so ist diese ebenfalls auf weitere verschiedene Arten von Rundballenpressen, wie eine absätzig arbeitende Solopresse anwendbar. Ferner sind bei der erfindungsgemäßen Rundballenpresse 1 zur Umwicklung der Mantelfläche der Rundballen 3 nicht nur Folie 14, sondern auch alternative weitere Wickelmaterialien wie Netz einsetzbar.

## Patentansprüche

1. Rundballenpresse (1) zum Pressen von landwirtschaftlichem Erntegut, wie Heu, Stroh oder dergleichen, mit einer Presseinrichtungen aufweisenden Presskammer (11) und einer Wickelvorrichtung (12) zum Einwickeln eines fertigen Rundballens (3) mit Wickelmaterial (14) in der Presskammer (3), wobei die Wickelvorrichtung (12) eine Zuführeinrichtung (15) zum Zuführen einer Wickelmaterialbahn (14) zu dem Rundballen (3) in der Presskammer (11) aufweist, welche zumindest zwischen einer Parkposition und einer Zuführposition verlagerbar ist, **dadurch gekennzeichnet, dass** die Rundballenpresse (1) eine Sicherungseinrichtung (26) aufweist und die Sicherungseinrichtung (26) und die Zuführeinrichtung (15) relativ zueinander derart verlagerbar sind, dass sie durch ihr Zusammenwirken die Wickelmaterialbahn (14) in ihrer Lage sichern, wobei das über die Zuführeinrichtung (15) geführte Wickelmaterial durch die Verlagerung der Zuführeinrichtung (15) in ihre Parkposition zwischen der Sicherungseinrichtung (26) und der Zuführeinrichtung (15) eingeklemmt ist.

2. Rundballenpresse (1) nach Anspruch 1, **dadurch gekennzeichnet, dass** die Sicherungseinrichtung (26) derart ausgebildet ist, dass sie im Zusammenwirken mit der Zuführeinrichtung (15) in der Parkposition der Zuführeinrichtung (15) eine kraftschlüssige Sicherung der Wickelmaterialbahn (14) sicherstellt.

3. Rundballenpresse (1) nach Anspruch 1, **dadurch gekennzeichnet, dass** die Zuführeinrichtung (15) zwischen zwei Schwenkarmen (19) angeordnete Führungsrollen (21,20) umfasst, zwischen denen das von der Vorratsrolle abgezogene Wickelmaterial geführt wird und mittels eines Führungsbleches dem Rundballen in der Presskammer zugeführt wird.

4. Rundballenpresse (1) nach Anspruch 1, **dadurch gekennzeichnet, dass** die Sicherungseinrichtung (26) sich zumindest annähernd im Bereich der Bewegungsbahn der Zuführeinrichtung (15) befindet.

5. Rundballenpresse (1) nach zumindest einem der vorhergehenden Ansprüche, **dadurch gekennzeichnet, dass** die Sicherungseinrichtung (26) ortsfest in der Rundballenpresse (1) angebracht ist.

6. Rundballenpresse (1) nach zumindest einem der vorhergehenden Ansprüche, **dadurch gekennzeichnet, dass** die Sicherungseinrichtung (26) durch die Verlagerung der Zuführeinrichtung (15) in die Parkposition aktivier- bzw. deaktivierbar ist.

7. Rundballenpresse (1) nach zumindest einem der vorhergehenden Ansprüche, **dadurch gekennzeichnet, dass** sich die Sicherungseinrichtung (26) quer zur Längsmittelachse der Rundballenpresse (1) über die gesamte Breite der Wickelmaterialbahn (14) erstreckt.

8. Rundballenpresse (1) nach zumindest einem der vorhergehenden Ansprüche, **dadurch gekennzeichnet, dass** zumindest der Kontaktbereich der Sicherungseinrichtung (26) mit der Wickelmaterialbahn (14) durch Einwirkung der Zuführeinrichtung (15) in ihrer Parkposition elastisch verformbar ist.

9. Rundballenpresse (1) nach zumindest einem der vorhergehenden Ansprüche, **dadurch gekennzeichnet, dass** das Wickelmaterial als Folie (14) ausgeführt ist.

## Claims

1. Round baler (1) for pressing agricultural crops, such as hay, straw or similar, comprising a pressing chamber (11), which has pressing apparatuses, and a wrapping device (12) for wrapping a finished round bale (3) in wrapping material (14) inside the pressing chamber (3), the wrapping device (12) having a supply apparatus (15) for supplying a wrapping material web (14) to the round bale (3) inside the pressing chamber (11), which apparatus is movable at least between a parking position and a supply position, **characterised in that** the round baler (1) has a securing apparatus (26), and the securing apparatus (26) and the supply apparatus (15) are movable relative to one another such that they secure the wrapping material web (14) in position by their cooperation, the wrapping material, which is guided by means of the supply apparatus (15), being clamped between the securing apparatus (26) and the supply apparatus (15) by the movement of the supply apparatus (15) into the idle position thereof.

2. Round baler (1) according to claim 1, **characterised in that** the securing apparatus (26) is designed such that, in cooperation with the supply apparatus (15) in the idle position of the supply apparatus (15), it ensures frictional securing of the wrapping material web (14).

3. Round baler (1) according to claim 1, **characterised in that** the supply apparatus (15) comprises guide rollers (21, 20) which are arranged between two pivot arms (19) and between which the wrapping material drawn from the supply roll is guided and is supplied to the round bale inside the pressing chamber by means of a guide plate.

4. Round baler (1) according to claim 1, **characterised in that** the securing apparatus (26) is at least approximately in the region of the movement path of the supply apparatus (15).

5. Round baler (1) according to at least one of the preceding claims, **characterised in that** the securing apparatus (26) is fixedly mounted inside the round baler (1).

6. Round baler (1) according to at least one of the preceding claims, **characterised in that** the securing apparatus (26) can be activated or deactivated by the movement of the supply apparatus (15) into the idle position.

7. Round baler (1) according to at least one of the preceding claims, **characterised in that** the securing apparatus (26) extends transversely to the longitudinal central axis of the round baler (1), over the entire width of the wrapping material web (14).

8. Round baler (1) according to at least one of the preceding claims, **characterised in that** at least the contact region of the securing apparatus (26) with the wrapping material web (14) can be elastically deformed by the action of the supply apparatus (15) in the idle position thereof.

9. Round baler (1) according to at least one of the preceding claims, **characterised in that** the wrapping material is designed as a film (14).

## Revendications

1. Presse à balles rondes (1) pour permettre de comprimer des produits de récolte agricoles tels que du foin, de la paille ou similaire avec un dispositif de compression comprenant une chambre de compression (11) et un dispositif d'enroulement (12) permettant d'envelopper une balle ronde finie (3) avec un matériau d'enroulement (14) dans la chambre de compression (3), le dispositif d'enroulement (12) comprenant un dispositif d'alimentation (15) permettant de transférer une bande de matériau d'enroulement (14) vers la balle ronde (3) situées dans la chambre de compression (11), et pouvant être déplacé au moins entre une position de repos et une position d'alimentation,
**caractérisée en ce que**
la presse à balles rondes (1) comporte un dispositif de sécurité (26), et le dispositif de sécurité (26) et le dispositif d'alimentation (15) peuvent être déplacés l'un par rapport à l'autre, de façon à garantir par leur coopération la position de la bande de matériau d'enroulement (14), le matériau d'enroulement passant dans le dispositif d'alimentation (15) étant pincé entre le dispositif de sécurité (26) et le dispositif d'alimentation (15) par le déplacement de ce dispositif d'alimentation (15) dans sa position de repos.

2. Presse à balles rondes (1) conforme à la revendication 1,
**caractérisée en ce que**
le dispositif de sécurité (26) est réalisé de sorte qu'il garantisse, en coopération avec le dispositif d'alimentation (15) dans la position de repos de ce dispositif d'alimentation (15) une mise en sécurité par une liaison par la force de la bande de matériau d'enroulement (14).

3. Presse à balles rondes (1) conforme à la revendication 1,
**caractérisée en ce que**
le dispositif d'alimentation (15) comporte des rouleaux de guidage (19) montés entre deux bras pivotants (21, 20) entre lesquels le matériau d'enroulement déroulé d'un rouleau de stockage passe et est transféré au moyen d'une tôle de guidage vers la balle ronde située dans la chambre de compression.

4. Presse à balles rondes (1) conforme à la revendication 1,
**caractérisée en ce que**
le dispositif de sécurité (26) est situé au moins approximativement dans la zone du trajet de déplacement du dispositif d'alimentation (15).

5. Presse à balles rondes (1) conforme à au moins l'une des revendications précédentes,
**caractérisée en ce que**
le dispositif de sécurité (26) est monté fixe dans la presse à balles rondes (1).

6. Presse à balles rondes (1) conforme à au moins l'une des revendications précédentes,
**caractérisée en ce que**
le dispositif de sécurité (26) peut être activé ou désactivé dans la position de repos par le déplacement du dispositif d'alimentation (15).

7. Presse à balles rondes (1) conforme à au moins l'une des revendications précédentes,
**caractérisée en ce que**
le dispositif de sécurité (26) s'étend sur la totalité de la largeur de la bande de matériau d'enroulement (14) transversalement à l'axe longitudinal médian de la presse à balles rondes (1).

8. Presse à balles rondes (1) conforme à au moins l'une des revendications précédentes,
**caractérisée en ce qu'**
au moins la zone de contact du dispositif de sécurité (26) avec la bande de matériau d'enroulement (14) peut être élastiquement déformée par l'action du dispositif d'alimentation (15) dans sa position de repos.

9. Presse à balles rondes (1) conforme à au moins l'une des revendications précédentes,
**caractérisée en ce que**
le matériau d'enroulement est réalisé sous la forme d'un film (14).
